(19) Europäisches Patentamt

European Patent Office

Office européen des brevets

(11) **EP 4 756 974 A1**

(12) **EUROPEAN PATENT APPLICATION**
published in accordance with Art. 153(4) EPC

(43) Date of publication:
**10.06.2026   Bulletin 2026/24**

(21) Application number: **23947870.4**

(22) Date of filing: **04.08.2023**

(51) International Patent Classification (IPC):
**H01M 10/0587** [(2010.01)]

(52) Cooperative Patent Classification (CPC):
**H01M 10/0587; Y02E 60/10**

(86) International application number:
**PCT/CN2023/111338**

(87) International publication number:
**WO 2025/030287 (13.02.2025 Gazette 2025/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Ningde Amperex Technology Limited
Ningde, Fujian 352100 (CN)**

(72) Inventors:
• **CHEN, Wen
Ningde, Fujian 352100 (CN)**
• **SU, Shiwei
Ningde, Fujian 352100 (CN)**

(74) Representative: **Kraus & Lederer PartGmbB
Thomas-Wimmer-Ring 15
80539 München (DE)**

(54) **ELECTROCHEMICAL APPARATUS, ELECTRICAL DEVICE, AND PREPARATION METHOD FOR ELECTROCHEMICAL APPARATUS**

(57) An electrochemical apparatus, an electrical device, and a preparation method of an electrochemical apparatus are provided. The electrochemical apparatus includes an electrode assembly. The electrode assembly includes an electrode plate assembly, a first tab, and a second tab. The electrode plate assembly includes a first electrode plate and a second electrode plate. The first electrode plate includes a first current collector and a first active material layer, a first region of a winding tail section of the first current collector is connected to the first tab, and the first current collector includes a first coated region and a first segment located at the winding tail section. The second electrode plate includes a second current collector and a second active material layer, a second region of a winding tail section of the second current collector is connected to the second tab, and the second current collector includes a second coated region and a second segment located at the winding tail section. A sum of equivalent magnetic field strengths of the first current collector $F_1$ and a sum of equivalent magnetic field strengths of the second current collector $F_2$ satisfy: $|F_1 - F_2| \leq 4 \times 10^{-5}$, which can better reduce an axial magnetic field at an end face of a wound structure, thereby further reducing interference of the electrochemical apparatus to the electrical device.

FIG. 5

**Description**

**TECHNICAL FIELD**

This application relates to the technical field of energy storage, and in particular, to an electrochemical apparatus, an electrical device, and a preparation method of an electrochemical apparatus.

**BACKGROUND**

For batteries with a wound structure, due to their special spiral involute structure, a strong axial magnetic field is generated at an end face of the wound structure. This causes significant interference to electrical devices such as Bluetooth earphones, affecting normal use of the electrical devices. Therefore, how to reduce the axial magnetic field of batteries with a wound structure has become an urgent problem to be solved.

**SUMMARY**

In view of this, this application provides an electrochemical apparatus to reduce the axial magnetic field of batteries with a wound structure, thereby reducing interference of the electrochemical apparatus to electrical devices.

According to a first aspect, this application provides an electrochemical apparatus. The electrochemical apparatus includes a housing and an electrode assembly. The electrode assembly is accommodated in the housing, and the electrode assembly includes an electrode plate assembly, a first tab, and a second tab. The electrode plate assembly includes a first electrode plate and a second electrode plate arranged in a wound manner. The first electrode plate includes a first current collector and a first active material layer. The second electrode plate includes a second current collector and a second active material layer. A winding start section of the second active material layer is located on an outer winding side of the electrode plate assembly relative to a winding start section of the first active material layer. The first tab is connected to a first region of a winding tail section of the first current collector. The second tab is connected to a second region of a winding tail section of the second current collector. Along a winding direction of the electrode plate assembly from inside to outside, the first region extends beyond the second region. The first active material layer includes a first effective region, the first effective region is a region of the first active material layer facing the second active material layer, and along the winding direction of the electrode plate assembly from inside to outside, a total length of the first effective region is $L_1$ mm. The first current collector includes a first coated region, and the first effective region is disposed on the surface of the first coated region. The second active material layer includes a second effective region, the second effective region is a region of the second active material layer facing the first active material layer, and along the winding direction of the electrode plate assembly from inside to outside, a total length of the second effective region is $L_2$ mm. The second current collector includes a second coated region, and the second effective region is disposed on the surface of the second coated region. Along the winding direction of the electrode plate assembly from inside to outside, the first coated region includes a first start end and a first termination end, and the second coated region includes a second start end and a second termination end. The first current collector includes a first segment from the first termination end to the center of the first region, a length of the first segment is $S_1$ mm, a winding angle of the first segment is $\alpha_1°$, the number of winding turns of the first segment $C_{10}$ is equal to $\alpha_1/360$, and a winding radius of the first segment $R_{10}$ mm is equal to $S_1/(2\pi \times C_{10})$. The second current collector optionally includes a second segment from the second termination end to the center of the second region, a length of the second segment is $S_2$ mm, a winding angle of the second segment is $\alpha_2°$, the number of winding turns of the second segment $C_{20}$ is equal to $\alpha_2/360$, and a winding radius of the second segment $R_{20}$ mm is equal to $S_2/(2\pi \times C_{20})$.

Along the winding direction of the electrode plate assembly from inside to outside, the number of winding turns of the first coated region and the second coated region is n, a winding radius of the i-th turn of the first coated region is $R_{1i}$ mm, a winding radius of the i-th turn of the second coated region is $R_{2i}$ mm, a length of the first effective region in the i-th turn is $l_{1i}$ mm, a proportion of the first effective region in the i-th turn $X_{li}$ is equal to $l_{1i}/L_1$, a length of the second effective region in the i-th turn is $l_{2i}$ mm, and a proportion of the second effective region in the i-th turn $X_{2i}$ is equal to $l_{2i}/L_2$. An equivalent current strength of the i-th turn in the first coated region $\lambda_{1i}$ is equal to $X_{11}+...+X_{1(i-1)}+0.5X_{1i}$, and an equivalent current strength of the i-th turn in the second coated region $\lambda_{2i}$ is equal to $X_{21}+...+X_{2(i-1)}+0.5X_{2i}$. An equivalent magnetic field strength of the i-th turn in the first coated region is $\lambda_{1i} \times f(R_{1i})$, an equivalent magnetic field strength of the first segment is $C_{10} \times f(R_{10})$, an equivalent magnetic field strength of the i-th turn in the second coated region is $\lambda_{2i} \times f(R_{2i})$, and an equivalent magnetic field strength of the second segment is $C_{20} \times f(R_{20})$, where $f(R)=0.000016866 R^4 - 0.0002591R^3 + 0.001204R^2 - 0.00198162R + 0.0018255$. A sum of equivalent magnetic field strengths of the first current collector is $F_1$, where $F_1 = C_{10} \times f(R_{10}) + \lambda_{11} \times f(R_{11}) + \lambda_{12} \times f(R_{12}) + ... + \lambda_{1n} \times f(R_{1n})$. A sum of equivalent magnetic field strengths of the second current collector is $F_2$, where $F_2 = C_{20} \times f(R_{20}) + \lambda_{21} \times f(R_{21}) + \lambda_{22} \times f(R_{22}) + ... + \lambda_{2n} \times f(R_{2n})$, satisfying: $|F_1 - F_2| \leq 4 \times 10^{-5}$.

The inventors of this application have found through research that, due to the electrode plate assembly with a wound structure having a special spiral involute structure, there is a difference in the winding radius between the first electrode plate on an inner winding side and the second electrode plate on the outer winding side for the same number of turns, resulting in a difference in the magnetic field strength generated in an axial direction by the first electrode plate and the second electrode plate for the same number of turns. Additionally, since an effective current magnitude within the same electrode plate gradually increases from inside to outside, the difference in the axial magnetic field strength generated by each turn of the first electrode plate and the second electrode plate from inside to outside further increases continuously, thereby accumulating a strong axial magnetic field at the end face of the electrode plate assembly. This application extends an effective length of the first electrode plate on the inner winding side and controls a length by which the first region extends beyond the second region until the sum of the equivalent magnetic field strengths of the first current collector $F_1$ and the sum of the equivalent magnetic field strengths of the second current collector $F_2$ satisfy: $|F_1\text{-}F_2|\leq 4\times 10^{-5}$. When the electrode assembly is discharged to generate current, a magnetic field generated by a portion of the first electrode plate extending beyond the second region can better counteract the axial magnetic field generated by the spiral involute structure, better reducing the axial magnetic field at the end face of the wound structure, thereby helping to reduce interference of the electrochemical apparatus to electrical devices.

In some embodiments, $|F_1\text{-}F_2|\leq 3\times 10^{-5}$ is further satisfied, which can further reduce the axial magnetic field at the end face of the wound structure, thereby further reducing the interference to electrical devices.

In some embodiments, along the winding direction of the electrode plate assembly from inside to outside, a winding length by which the first region extends beyond the second region is less than one turn. This helps to reduce an extended length of the first current collector, thereby reducing the risk of short circuit caused by misalignment due to excessive extension of the first current collector.

In some embodiments, the first electrode plate is a negative electrode plate, and the second electrode plate is a positive electrode plate. Along a direction opposite to the winding direction of the electrode plate assembly from inside to outside, the winding start section of the first active material layer extends beyond the winding start section of the second active material layer, and/or along the winding direction of the electrode plate assembly from inside to outside, a winding tail section of the first active material layer extends beyond a winding tail section of the second active material layer. This helps to reduce the risk of lithium precipitation, thereby improving the safety performance of the electrochemical apparatus.

In some embodiments, the housing includes a first housing portion and a second housing portion with opposite polarities. The first housing portion includes a top wall, a bottom wall, and a side wall. The second housing portion includes an electrode pole. The top wall is provided with a through hole, and the electrode pole is disposed in the through hole. This facilitates lead-out of the polarities of the electrode assembly within the housing.

In some embodiments, along the winding direction of the electrode plate assembly from inside to outside, the winding tail section of the first current collector further includes a blank segment extending beyond the first region and having no first active material layer disposed on a surface of the blank segment, and the blank segment covers the winding tail section of the second current collector. In this way, the blank segment of the first current collector is disposed between the winding tail section of the second current collector and the first housing portion, which enhances an isolation effect between the second current collector and the first housing portion, thereby helping to reduce the risk of short circuit caused by direct contact between the second current collector and the first housing portion.

In some embodiments, the first tab includes a first connection portion and a first bent portion, the first connection portion is connected to the first region, and the first bent portion includes a third region connected to the first housing portion. The electrochemical apparatus further includes a first connector; the first connector is located outside the housing; and the first connector includes a first end portion and a second end portion. The first end portion is connected to the first housing portion, the second end portion includes a fourth region configured to be connected to an external load, and an angle between a ray from the center of the third region to the center of the first region and a ray from the center of the third region to the center of the fourth region is $\theta_1$, satisfying $\theta_1\leq 45°$. This helps to reduce the impact of the current passing through the first bent portion on the axial magnetic field, thereby further reducing the interference to electrical devices.

In some embodiments, the second tab includes a second connection portion and a second bent portion; the second connection portion is connected to the second region; and the second bent portion includes a fifth region connected to the second housing portion. The electrochemical apparatus further includes a second connector, the second connector is located outside the housing, and the second connector includes a third end portion and a fourth end portion. The third end portion is connected to the second housing portion; the fourth end portion includes a sixth region configured to be connected to an external load; and an angle between a ray from the center of the fifth region to the center of the second region and a ray from the center of the fifth region to the center of the sixth region is $\theta_2$, satisfying $\theta_2\leq 45°$. This helps to reduce the impact of the current passing through the second bent portion on the axial magnetic field, thereby further reducing the interference to electrical devices.

In some embodiments, the electrode plate assembly further includes a first separator, and the first separator is disposed between the first electrode plate and the second electrode plate. Along the winding direction of the electrode plate assembly from inside to outside, a winding tail section of the first separator extends beyond the first electrode plate.

This allows the winding tail end of the first electrode plate to be covered by the first separator, thereby helping to reduce the risk of direct contact between the first electrode plate and the second electrode plate.

In some embodiments, the electrode plate assembly further includes a second separator, and the second separator is disposed between the first electrode plate and the second electrode plate. Along the winding direction of the electrode plate assembly from inside to outside, a winding tail section of the second separator extends beyond the second electrode plate. This allows the winding tail section of the second electrode plate to be covered by the second separator, thereby helping to reduce the risk of direct contact between the second electrode plate and the first electrode plate or the housing.

In some embodiments, the electrochemical apparatus further includes an insulating member, and the insulating member is disposed between the housing and the electrode plate assembly. This helps to reduce the risk of direct contact between the electrode plate assembly and the housing, thereby helping to reduce the risk of internal short circuit in the electrochemical apparatus.

According to a second aspect, this application further provides an electrical device including the electrochemical apparatus according to any of the above embodiments. The electrochemical apparatus in the above embodiments has a reduced axial magnetic field, which reduces electromagnetic interference to the electrical device, thereby improving the using reliability of the electrical device.

According to a third aspect, this application further provides a preparation method of an electrochemical apparatus. The electrochemical apparatus includes a housing and an electrode assembly. The electrode assembly is accommodated in the housing, and the electrode assembly includes an electrode plate assembly, a first tab, and a second tab. The electrode plate assembly includes a first electrode plate and a second electrode plate arranged in a wound manner. The first electrode plate includes a first current collector and a first active material layer. The second electrode plate includes a second current collector and a second active material layer. A winding start section of the second active material layer is located on an outer winding side of the electrode plate assembly relative to a winding start section of the first active material layer. The first tab is connected to a first region of a winding tail section of the first current collector. The second tab is connected to a second region of a winding tail section of the second current collector. Along a winding direction of the electrode plate assembly from inside to outside, the first region extends beyond the second region. The first active material layer includes a first effective region, where the first effective region is a region of the first active material layer facing the second active material layer; and along the winding direction of the electrode plate assembly from inside to outside, a total length of the first effective region is $L_1$ mm. The first current collector includes a first coated region; and the first effective region is disposed on a surface of the first coated region. The second active material layer includes a second effective region, where the second effective region is a region of the second active material layer facing the first active material layer; and along the winding direction of the electrode plate assembly from inside to outside, a total length of the second effective region is $L_2$ mm. The second current collector includes a second coated region; and the second effective region is disposed on a surface of the second coated region. Along the winding direction of the electrode plate assembly from inside to outside, the first coated region includes a first start end and a first termination end, and the second coated region includes a second start end and a second termination end. The first current collector includes a first segment from the first termination end to the center of the first region, where a length of the first segment is $S_1$ mm; and the second current collector optionally includes a second segment from the second termination end to the center of the second region, where a length of the second segment is $S_2$ mm.

Along the winding direction of the electrode plate assembly from inside to outside, the number of winding turns of the first coated region and the second coated region is n; a winding radius of the i-th turn of the first coated region is $R_{1i}$ mm; a winding radius of the i-th turn of the second coated region is $R_{2i}$ mm; a length of the first effective region in the i-th turn is $l_{1i}$ mm; a proportion of the first effective region in the i-th turn $X_{1i}$ is equal to $l_{1i}/L_1$; a length of the second effective region in the i-th turn is $l_{2i}$ mm; and a proportion of the second effective region in the i-th turn $X_{2i}$ is equal to $l_{2i}/L_2$. An equivalent current strength of the i-th turn in the first coated region $\lambda_{1i}$ is equal to $X_{11}+...+X_{1(i-1)}+0.5X_{1i}$, and an equivalent current strength of the i-th turn in the second coated region $\lambda_{2i}$ is equal to $X_{21}+...+X_{2(i-1)}+0.5X_{2i}$.

Based on an equivalent magnetic field strength generated in the i-th turn of the first coated region by the equivalent current strength $\lambda_{1i}$ in the i-th turn of the first coated region, a sum of equivalent magnetic field strengths generated by the first coated region is calculated; based on an equivalent magnetic field strength generated in the i-th turn of the second coated region by the equivalent current strength $\lambda_{2i}$ in the i-th turn of the second coated region, a sum of equivalent magnetic field strengths generated by the second coated region is calculated; and based on a difference between the sum of the equivalent magnetic field strengths generated by the first coated region and the sum of the equivalent magnetic field strengths generated by the second coated region, a value by which the length $S_1$ mm of the first segment is greater than the length $S_2$ mm of the second segment is determined to achieve a small difference between a sum of equivalent magnetic field strengths $F_1$ generated by the first current collector and a sum of equivalent magnetic field strengths $F_2$ generated by the second current collector.

By comprehensively considering the differences in the winding radius and current magnitude of each turn in the first current collector and the second current collector, an optimal value by which the length $S_1$ mm of the first segment is greater than the length $S_2$ mm of the second segment is selected to achieve a small difference between the sum of the equivalent magnetic field strengths $F_1$ generated by the first current collector and the sum of the equivalent magnetic field strengths $F_2$ generated by the second current collector, thereby facilitating the preparation of an electrochemical apparatus with small interference to electrical devices.

In some embodiments, based on $f(R)=0.000016866 R^4-0.0002591R^3+0.001204R^2-0.00198162R+0.0018255$, the equivalent magnetic field strength generated by the i-th turn in the first coated region is calculated as $\lambda_{1i}\times f(R_{1i})$, and the equivalent magnetic field strength generated by the i-th turn in the second coated region is calculated as $\lambda_{2i}\times f(R_{2i})$.

In some embodiments, the method further includes a step of calculating an equivalent magnetic field strength of the first segment and an equivalent magnetic field strength of the second segment, where a winding angle of the first segment is $\alpha_1°$, the number of winding turns of the first segment $C_{10}$ is equal to $\alpha_1/360$, a winding radius of the first segment $R_{10}$ mm is equal to $S_1/(2\pi\times C_{10})$, a winding angle of the second segment is $\alpha_2°$, the number of winding turns of the second segment $C_{20}$ is equal to $\alpha_2/360$, a winding radius of the second segment $R_{20}$ mm is equal to $S_2/(2\pi\times C_{20})$, the equivalent magnetic field strength of the first segment is $C_{10}\times f(R_{10})$, and the equivalent magnetic field strength of the second segment is $C_{20}\times f(R_{20})$, satisfying $F_1=C_{10}\times f(R_{10})+\lambda_{11}\times f(R_{11})+\lambda_{12}\times f(R_{12})+...+\lambda_{1n}\times f(R_{1n})$, and $F_2=C_{20}\times f(R_{20})+\lambda_{21}\times f(R_{21})+\lambda_{22}\times f(R_{22})+...+\lambda_{2n}\times f(R_{2n})$; and determining a value by which the length $S_1$ mm of the first segment is greater than the length $S_2$ mm of the second segment, to make $F_1$ and $F_2$ satisfy: $|F_1-F_2|\leq 4\times 10^{-5}$.

## DESCRIPTION OF DRAWINGS

FIG. 1 is a schematic diagram of an electrical device according to an embodiment of this application.
FIG. 2 is a schematic structural diagram of an electrochemical apparatus according to an embodiment of this application.
FIG. 3 is a cross-sectional view of the electrochemical apparatus in FIG. 2.
FIG. 4 is a schematic structural diagram of an electrode assembly according to an embodiment of this application.
FIG. 5 is a schematic diagram of winding of an electrode plate assembly according to an embodiment of this application.
FIG. 6 is a schematic diagram of winding of an electrode plate assembly according to another embodiment of this application.
FIG. 7 is a schematic structural diagram of an electrode assembly and a first connector according to an embodiment of this application.
FIG. 8 is a schematic structural diagram of an electrode assembly and a second connector according to an embodiment of this application.

Description of reference signs of main components

| | |
|---|---|
| Electrochemical apparatus | 100 |
| Housing | 10 |
| First housing portion | 11 |
| Accommodation space | 11a |
| Top wall | 111 |
| Through hole | 1111 |
| Bottom wall | 112 |
| Side wall | 113 |
| Second housing portion | 12 |
| Installation portion | 121 |
| Lead-out portion | 122 |
| Electrode assembly | 20 |
| Electrode plate assembly | 21 |
| First end face | 21a |
| Second end face | 21b |
| First electrode plate | 211 |
| First current collector | 2111 |
| First region | 211a |

(continued)

| | |
|---|---|
| Blank segment | 211b |
| First coated region | 211c |
| First start end | 211d |
| First termination end | 211e |
| First segment | 211f |
| Third coated region | 211g |
| Fourth coated region | 211h |
| First active material layer | 2112 |
| First effective region | 2113 |
| First ineffective region | 2114 |
| Second ineffective region | 2115 |
| Second electrode plate | 212 |
| Second current collector | 2121 |
| Second region | 212a |
| Second coated region | 212b |
| Second start end | 212c |
| Second termination end | 212d |
| Second segment | 212e |
| Second active material layer | 2122 |
| Second effective region | 2123 |
| First tab | 22 |
| First connection portion | 221 |
| First bent portion | 222 |
| Third region | 222a |
| Second tab | 23 |
| Second connection portion | 231 |
| Second bent portion | 232 |
| Fifth region | 232a |
| First separator | 24 |
| Second separator | 25 |
| First connector | 30 |
| First end portion | 31 |
| Second end portion | 32 |
| Fourth region | 321 |
| Second connector | 40 |
| Third end portion | 41 |
| Fourth end portion | 42 |
| Sixth region | 421 |
| Sealing member | 50 |
| Winding center | B |
| Width direction of first electrode plate | X |
| Winding direction of electrode plate assembly from inside to outside | C |
| Device body | 200 |
| Electrical device | 1000 |

## DETAILED DESCRIPTION

Technical solutions of some embodiments of this application are described below in conjunction with the accompanying drawings. It is apparent that the described embodiments are only some embodiments rather than all embodiments of this application.

It should be noted that in this application, the "region center" means that the center of this region is the centroid of a planar shape of this region when this region is a continuous entirety. Understandably, the centroid of the planar shape can be determined by a hanging method, where the planar shape is suspended with a thin string, a straight line is drawn in a vertical direction from a starting point of the string, the planar shape is suspended again at an endpoint different from that at the first time, another straight line is drawn in the same manner, and an intersection of the two straight lines is the centroid of the planar shape. When this region is composed by multiple discrete regions, the center of this region is the center of the smallest circumscribed circle containing the multiple discrete regions. Understandably, the smallest circumscribed circle is a circle with the smallest radius that contains the multiple discrete regions.

It can be understood that when a component is considered to be "connected" to another component, it may be directly connected to the another component or there may be an intermediate component. When a component is considered to be "disposed on" another component, it may be directly disposed on the another component or there may be an intermediate component. The terms "top", "bottom", and similar expressions used herein are for illustrative purposes only.

The terms "first", "second", and the like are used only to distinguish different objects and should not be construed as indicating or implying relative importance, the number of indicated technical features, a specific order, or a primary-secondary relationship.

The term "parallel" is used to describe an ideal state between two components. In actual production or use, the two components may be in an approximately parallel state. The components described as "parallel" may not be absolutely straight lines or planes, but may be roughly straight or planar, and can be considered as "straight" or "planar" as long as the overall extension direction appears to be straight or planar from a macroscopic perspective.

It should be recognized that the dimensions and thicknesses of the components shown in the drawings are for better understanding and convenience of description, and this application is not limited to the dimensions and thicknesses shown in the drawings.

Unless otherwise defined, all technical and scientific terms used herein have the same meaning as commonly understood by those skilled in the technical field of this application. The terms used in the specification of this application are for the purpose of describing specific embodiments only and are not intended to limit this application.

Some embodiments of this application are described below in conjunction with the drawings. In the absence of conflict, the following embodiments and the features in the following embodiments can be combined with each other.

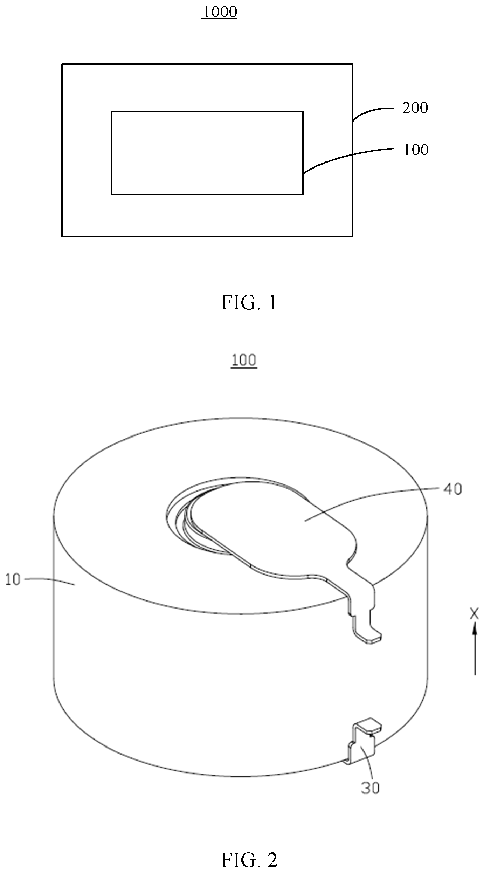

Referring to FIG. 1, an embodiment of this application provides an electrical device 1000, where the electrical device 1000 includes an electrochemical apparatus 100.

In some embodiments, referring to FIG. 1, the electrical device 1000 further includes a device body 200, and the electrochemical apparatus 100 is installed in the device body 200 to supply power to the device body 200.

In some embodiments, the electrical device 1000 may be a Bluetooth earphone, Bluetooth speaker, mobile phone, laptop, tablet, e-book reader, electric toy, gaming console, camcorder, portable recorder, radio, smart watch, illuminating lamp, calculator, or the like, which is not listed exhaustively herein.

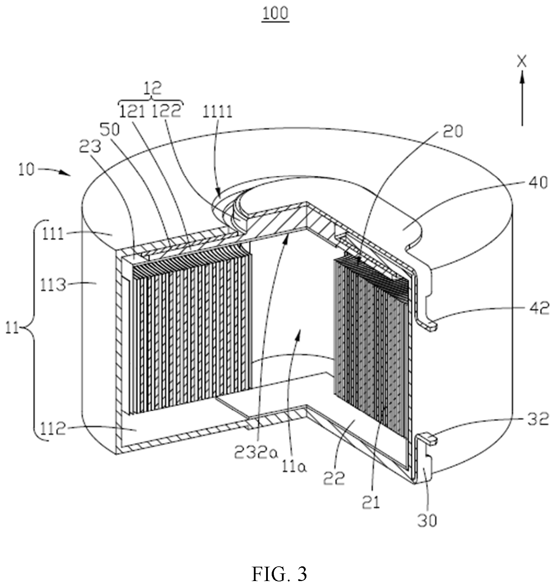

In some embodiments, referring to FIG. 2 and FIG. 3, the electrochemical apparatus 100 includes a housing 10 and an electrode assembly 20, and the electrode assembly 20 is accommodated within the housing 10. The electrode assembly 20 includes an electrode plate assembly 21, a first tab 22, and a second tab 23. The first tab 22 is connected to the electrode plate assembly 21, and the second tab 23 is connected to the electrode plate assembly 21.

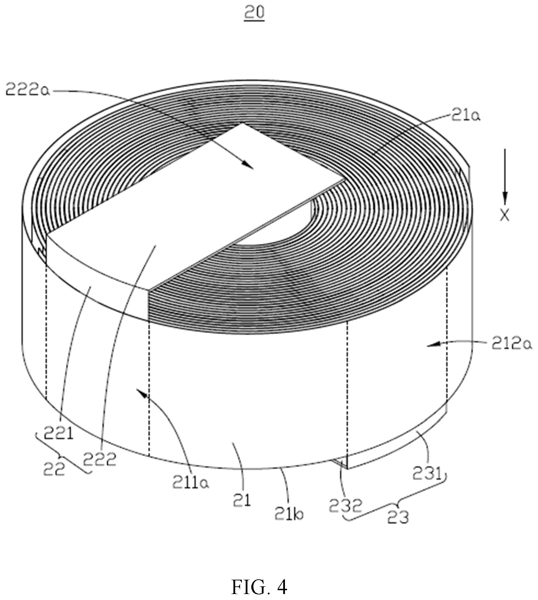

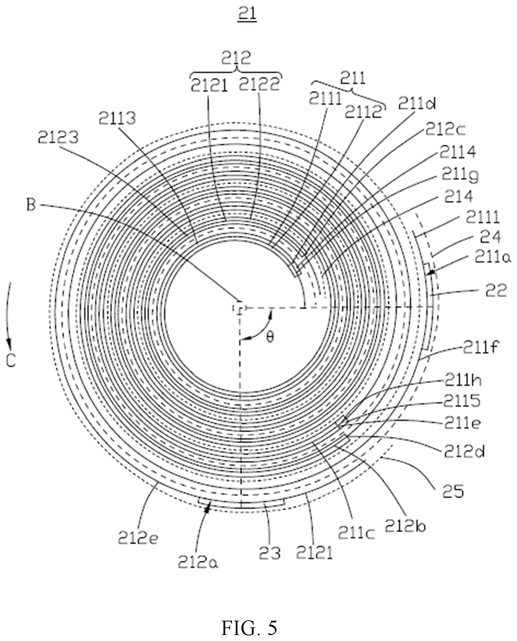

In some embodiments, referring to FIG. 4 and FIG. 5, the electrode plate assembly 21 includes a first electrode plate 211 and a second electrode plate 212 arranged in a wound manner, and along a width direction of the first electrode plate 211, the wound electrode plate assembly 21 includes a first end face 21a and a second end face 21b opposite to each other. The first electrode plate 211 has a first polarity, the second electrode plate 212 has a second polarity, and the first polarity and the second polarity are opposite to each other. For example, the first electrode plate 211 is a negative electrode plate, and the second electrode plate 212 is a positive electrode plate; or, for example, the first electrode plate 211 is a positive electrode plate, and the second electrode plate 212 is a negative electrode plate.

In some embodiments, referring to FIG. 4 and FIG. 5, the first electrode plate 211 is connected to the first tab 22, making the first tab 22 have the first polarity. The second electrode plate 212 is connected to the second tab 23, making the second tab 23 have the second polarity.

In some embodiments, referring to FIG. 5, the first electrode plate 211 includes a first current collector 2111 and a first active material layer 2112; the second electrode plate 212 includes a second current collector 2121 and a second active material layer 2122; and a winding start section of the second active material layer 2122 is located on an outer winding side of the electrode plate assembly 21 relative to a winding start section of the first active material layer 2112.

The first current collector 2111 and the second current collector 2121 may be metal layers. In an illustrative example, when the first electrode plate 211 is a negative electrode plate, the first current collector 2111 may be a metal layer including at least one of copper, nickel, tantalum, titanium, or the like, such as copper foil. The first active material layer 2112 includes a negative electrode active material, and the negative electrode active material may include at least one of graphite, hard carbon, soft carbon, silicon, silicon-oxygen material, silicon-carbon material, or the like. When the second electrode plate 212 is a positive electrode plate, the second current collector 2121 may be a metal layer including at least one of aluminum, nickel, tantalum, titanium, or the like, such as aluminum foil. The second active material layer 2122 includes a positive electrode active material, and the positive electrode active material may include at least one of lithium cobalt oxide, lithium nickel cobalt manganese oxide, lithium nickel cobalt aluminum oxide, lithium iron phosphate, lithium manganese iron phosphate, lithium manganese oxide, or the like.

Still referring to FIG. 4 and FIG. 5, the first current collector 2111 is connected to the first tab 22, and the first current collector 2111 includes a first region 211a connected to the first tab 22, where the first region 211a is located at a winding tail section of the first current collector 2111. Understandably, the first region 211a is a region where the first current collector 2111 and the first tab 22 are connected. The second current collector 2121 is connected to the second tab 23, and the second current collector 2121 includes a second region 212a connected to the second tab 23, where the second region 212a is located at a winding tail section of the second current collector 2121. Understandably, the second region 212a is a region where the second current collector 2121 and the second tab 23 are connected. Along a winding direction C of the electrode plate assembly 21 from inside to outside, the first region 211a extends beyond the second region 212a.

Still referring to FIG. 5, the first active material layer 2112 includes a first effective region 2113, where the first effective region 2113 is a region of the first active material layer 2112 facing the second active material layer 2122. Along a winding direction C of the electrode plate assembly 21 from inside to outside, a total length of the first effective region 2113 is $L_1$ mm, where the total length of the first effective region 2113 is a sum of lengths of portions of the first effective region 2113 on two opposite surfaces of the first current collector 2111. Understandably, a first active material layer 2112 may be provided on a surface of the innermost turn of the first current collector 2111 facing the winding center B. However, since there is no second active material layer 2122 provided on the opposite side, the first active material layer 2112 provided on the surface of the innermost turn is not the first effective region 2113. The first current collector 2111 further includes a first coated region 211c, and the first effective region 2113 is disposed on a surface of the first coated region 211c. The second active material layer 2122 includes a second effective region 2123, where the second effective region 2123 is a region of the second active material layer 2122 facing the first active material layer 2112. Along the winding direction C of the electrode plate assembly 21 from inside to outside, a total length of the second effective region 2123 is $L_2$ mm, where the total length of the second effective region 2123 is a sum of lengths of portions of the second effective region 2123 on two opposite surfaces of the second current collector 2121. The second current collector 2121 further includes a second coated region 212b, and the second effective region 2123 is disposed on a surface of the second coated region 212b.

Understandably, the first coated region 211c and the first region 211a are different regions of the first current collector 2111, and the second coated region 212b and the second region 212a are different regions of the second current collector 2121.

Still referring to FIG. 5, along the winding direction C of the electrode plate assembly 21 from inside to outside, the first coated region 211c includes a first start end 211d and a first termination end 211e, and the second coated region 212b includes a second start end 212c and a second termination end 212d. The first current collector 2111 includes a first segment 211f from the first termination end 211e to the center of the first region 211a, where a length of the first segment 211f is $S_1$ mm, a winding angle of the first segment 211f is $\alpha_1°$, the number of winding turns of the first segment 211f $C_{10}$ is equal to $\alpha_1/360$, and a winding radius of the first segment 211f $R_{10}$ mm is equal to $S_1/(2\pi \times C_{10})$. The second current collector 2121 optionally includes a second segment 212e from the second termination end 212d to the center of the second region 212a, where a length of the second segment 212e is $S_2$ mm, a winding angle of the second segment 212e is $\alpha_2°$, the number of winding turns of the second segment 212e $C_{20}$ is equal to $\alpha_2/360$, and a winding radius of the second segment 212e $R_{20}$ mm is equal to $S_2/(2\pi \times C_{20})$.

Along the winding direction C of the electrode plate assembly 21 from inside to outside, the number of winding turns of the first coated region 211c and the second coated region 212b is n, a winding radius of the i-th turn of the first coated region 211c is $R_{1i}$ mm, and a winding radius of the i-th turn of the second coated region 212b is $R_{2i}$ mm.

Understandably, a winding length of the i-th turn of the first coated region 211c is $L_{1i}$ mm, and a winding angle of the i-th turn of the first coated region 211c is $\beta_i°$, so the number of turns of the i-th turn of the first coated region 211c $C_{1i}$ is equal to $\beta_i/360$, and the winding radius of the i-th turn of the first coated region 211c $R_{1i}$ mm is equal to $L_{1i}/(2\pi \times C_{1i})$. A winding length of the i-th turn of the second coated region 212b is $L_{2i}$ mm, and a winding angle of the i-th turn of the second coated region 212b is $\gamma_i°$, so the number of turns of the i-th turn of the second coated region 212b $C_{2i}$ is equal to $\gamma_i/360$, and the winding radius of the i-th turn of the second coated region 212b $R_{2i}$ mm is equal to $L_{2i}/(2\pi \times C_{2i})$.

A length of the first effective region 2113 in the i-th turn is $l_{1i}$ mm, and a proportion of the first effective region 2113 in the i-th turn $X_{1i}$ is equal to $l_{1i}/L_1$. A length of the second effective region 2123 in the i-th turn is $l_{2i}$ mm, and a proportion of the second effective region 2123 in the i-th turn $X_{2i}$ is equal to $l_{2i}/L_2$. An equivalent current strength of the i-th turn in the first coated region 211c $\lambda_{1i}$ is equal to $X_{11}+...+X_{1(i-1)}+0.5X_{1i}$, and an equivalent current strength of the i-th turn in the second coated region 212b $\lambda_{2i}$ is equal to $X_{21}+...+X_{2(i-1)}+0.5X_{2i}$. Understandably, taking $\lambda_{1i}$ as an example, the above recursive formula should be understood as follows: an equivalent current strength of the first turn in the first coated region 211c $\lambda_{11}$ is equal to $0.5X_{11}$, an equivalent current strength of the second turn $\lambda_{12}$ is equal to $X_{11}+0.5X_{12}$, an equivalent current strength of the third turn $\lambda_{13}$ is equal to $X_{11}+X_{12}+0.5X_{13}$, and so on. $\lambda_{2i}$ follows the same relationship, and details are not described herein again.

The inventors of this application have found through research that the winding radius of each turn in the electrode plate has a significant impact on the magnetic field generated at the winding end face. In an example in which an electrical device 1000 is a Bluetooth earphone, the first electrode plate 211 and the second electrode plate 212 with different winding radii in the electrode plate assembly 21 of a wound structure generate different magnetic fields in a voice coil of the Bluetooth earphone. Taking the first electrode plate 211 as an example, an average magnetic field strength in the voice coil of the Bluetooth earphone when a unit current (1A) passes through the first electrode plate 211 with different winding radii is calculated using the Biot-Savart law. A relationship between the magnetic field strength obtained through calculation and the winding radius of the first electrode plate 211 is shown in Table 1 below.

**Table 1: Relationship between winding radius of i-th turn of first electrode plate 211 and magnetic field strength**

| Winding radius of i-th turn of first electrode plate 211 (R) (mm) | Magnetic field strength of i-th turn of first electrode plate 211 (f(R)) (T) |
|---|---|
| 5 | 0.00017173 |
| 4.777 | 0.000372703 |
| 4.554 | 0.000557982 |
| 4.331 | 0.000719303 |
| 4.108 | 0.000846813 |
| 3.885 | 0.000951195 |
| 3.662 | 0.001032165 |
| 3.439 | 0.001077423 |
| 3.216 | 0.001095157 |
| 2.993 | 0.001094333 |
| 2.77 | 0.001069621 |
| 2.547 | 0.001026648 |
| 2.324 | 0.000963299 |
| 2.101 | 0.000904419 |
| 1.878 | 0.000845306 |
| 1.655 | 0.000800289 |

By fitting the winding radius of the i-th turn of the first electrode plate 211 and the magnetic field strength of the i-th turn of the first electrode plate 211 in Table 1, the following relationship formula is obtained: $f(R) = 0.000016866R^4 - 0.0002591R^3 + 0.001204R^2 - 0.00198162R + 0.0018255$. Certainly, a relationship between the winding radius of the i-th turn of the second electrode plate 212 and a magnetic field strength of the i-th turn of the second electrode plate 212 also follows the above relationship formula, and details are not described herein again.

Thus, it is concluded that the equivalent magnetic field strength of the i-th turn in the first coated region 211c is $\lambda_{1i} \times f(R_{1i})$, the equivalent magnetic field strength of the first segment 211f is $C_{10} \times f(R_{10})$, the equivalent magnetic field strength of the i-th turn in the second coated region 212b is $\lambda_{2i} \times f(R_{2i})$, and the equivalent magnetic field strength of the second segment 212e is $C_{20} \times f(R_{20})$. Therefore, the sum of the equivalent magnetic field strengths of the first current collector 2111 $F_1$ is equal to $C_{10} \times f(R_{10}) + \lambda_{11} \times f(R_{11}) + \lambda_{12} \times f(R_{12}) + ... + \lambda_{1n} \times f(R_{1n})$, and the sum of the equivalent magnetic field strengths of the second current collector 2121 $F_2$ is equal to $C_{20} \times f(R_{20}) + \lambda_{21} \times f(R_{21}) + \lambda_{22} \times f(R_{22}) + ... + \lambda_{2n} \times f(R_{2n})$, satisfying: $|F_1 - F_2| \leq 4 \times 10^{-5}$.

In this application, an effective length of the first electrode plate 211 on the inner winding side is extended to make the first region 211a extend beyond the second region 212a, and the length by which the first region 211a extends beyond the second region 212a is controlled until the sum of the equivalent magnetic field strengths of the first current collector 2111 $F_1$ and the sum of the equivalent magnetic field strengths of the second current collector 2121 $F_2$ satisfy: $|F_1 - F_2| \leq 4 \times 10^{-5}$. When the electrode assembly 20 is discharged to generate current, a magnetic field generated by a portion of the first electrode plate 211 extending beyond the second region 212a can better counteract an axial magnetic field generated by the spiral involute structure, effectively reducing the axial magnetic field at the end face of the wound structure, thereby helping to reduce interference of the electrochemical apparatus 100 to the electrical device 1000.

Understandably, the second current collector 2121 optionally including the second segment 212e can be understood as that two cases are included, where one case is that the second current collector 2121 includes the second segment 212e, and the other case is that the second current collector 2121 does not include the second segment 212e. To be specific, the second region 212a and the second coated region 212b are connected along the winding direction of the electrode plate assembly 21 from inside to outside. In an embodiment where the second current collector 2121 includes the second segment 212e, $S_2>0$; and in an embodiment where the second current collector 2121 does not include the second segment 212e, $S_2=0$.

In addition, understandably, the surface of the first segment 211f or the second segment 212e may be partially or entirely coated with an active material layer. For example, when the first electrode plate 211 is a negative electrode plate, the surface of the first segment 211f may be partially or entirely coated with a negative electrode active material layer. Since there is no corresponding positive electrode active material layer on an opposite side of the negative electrode active material layer, no effective current is generated during discharging. Moreover, since the negative electrode active material layer extends beyond the positive electrode active material layer in the winding direction, the risk of lithium precipitation during charging can be reduced, thereby improving the safety performance of the electrochemical apparatus 100.

Understandably, when $F_2>F_1$ and there is a significant difference therebetween, the effective length of the first electrode plate 211 can be extended, that is, the length by which the first region 211a extends beyond the second region 212a is extended. Preferably, the extended length of the first electrode plate 211 $D_1$ is equal to $2\pi\times R_1\times(F_2-F_1)/f(R_1)$, where $R_1$ is a distance from the center of the first region 211a to the winding center B of the electrode plate assembly 21. In this case, when observed along a width direction X of the first electrode plate 211, an angle by which a ray from the winding center B of the electrode plate assembly 21 to the center of the first region 211a rotates along the winding direction C of the electrode plate assembly 21 from inside to outside is $\theta_1'$, $\theta_1'=360°\times D_1/2\pi R_1$.

When $F_2<F_1$ and there is a significant difference therebetween, the effective length of the second electrode plate 212 can be extended, that is, the length by which the first region 211a extends beyond the second region 212a is reduced. Preferably, the extended length of the second electrode plate 212 $D_2$ is equal to $2\pi\times R_2\times(F_1-F_2)/f(R_2)$, where $R_2$ is a distance from the center of the second region 212a to the winding center B of the electrode plate assembly 21. In this case, when observed along a width direction of the second electrode plate 212, an angle by which a ray from the winding center B of the electrode plate assembly 21 to the center of the second region 212a rotates along the winding direction C of the electrode plate assembly 21 from inside to outside is $\theta_2'$, $\theta_2'=360°\times D_2/2\pi R_2$.

In some embodiments, $|F_1-F_2|\leq 3\times 10^{-5}$ is satisfied, which can further reduce the axial magnetic field at the end face of the wound structure, thereby further reducing the interference to the electrical device 1000.

In an illustrative example, a value of $|F_1-F_2|$ may be $4\times 10^{-5}$, $3.6\times 10^{-5}$, $3.5\times 10^{-5}$, $3.2\times 10^{-5}$, $3\times 10^{-5}$, $2.8\times 10^{-5}$, $2.5\times 10^{-5}$, $2\times 10^{-5}$, $1.5\times 10^{-5}$, $1\times 10^{-5}$, $5\times 10^{-6}$, $1\times 10^{-6}$, $5\times 10^{-7}$, $2\times 10^{-7}$, 0, or a range defined by any two of these values.

In some embodiments, referring to FIG. 3, the housing 10 includes a first housing portion 11 and a second housing portion 12, where the first housing portion 11 and the second housing portion 12 have opposite polarities, and the first housing portion 11 and the second housing portion 12 are connected in an insulating manner.

In some embodiments, referring to FIG. 3 to FIG. 5, the first electrode plate 211 is connected to the first tab 22, and the first tab 22 is connected to the first housing portion 11, making the first tab 22 and the first housing portion 11 have the first polarity. The second electrode plate 212 is connected to the second tab 23, and the second tab 23 is connected to the second housing portion 12, making the second tab 23 and the second housing portion 12 have the second polarity.

In some embodiments, referring to FIG. 3, the first housing portion 11 includes a top wall 111, a bottom wall 112, and a side wall 113, where the side wall 113 is located between the top wall 111 and the bottom wall 112, and the top wall 111 and the bottom wall 112 are both connected to the side wall 113 to enclose an accommodation space 11a for accommodating the electrode assembly 20. The first housing portion 11 can protect the electrode assembly 20, reducing the risk of external impact on the electrode assembly 20.

In some embodiments, referring to FIG. 3, the second housing portion 12 includes an electrode pole, the top wall 111 is provided with a through hole 1111, and the electrode pole is disposed in the through hole 1111 and connected to the top wall 111 in an insulating manner.

In some embodiments, referring to FIG. 3, the electrode pole includes an installation portion 121 and a lead-out portion 122, where the installation portion 121 is located within the accommodation space 11a and connected to the electrode assembly 20, and the installation portion 121 is also connected to the top wall 111 in an insulating manner. The lead-out portion 122 passes through the through hole 1111 and is at least partially exposed outside the accommodation space 11a.

In some embodiments, referring to FIG. 3, the electrochemical apparatus 100 further includes a sealing member 50, where the sealing member 50 is disposed between the top wall 111 and the installation portion 121 to realize insulated connection and sealing between the installation portion 121 and the top wall 111.

In some embodiments, the sealing member 50 may be a sealant.

In some embodiments, the electrode pole may be made of a conductive metal such as copper, aluminum, nickel, or iron. The electrode pole may be in a cylindrical shape, a hemispherical shape, a sheet-like shape, or a combined shape of these shapes, which is not specifically limited herein.

In some embodiments, referring to FIG. 5, along the winding direction C of the electrode plate assembly 21 from inside to outside, the winding length by which the first region 211a extends beyond the second region 212a is less than one turn. This helps to reduce the extended length of the first current collector 2111, thereby reducing the risk of short circuit caused by misalignment due to excessive extension of the first current collector 2111.

In some embodiments, referring to FIG. 5, the first electrode plate 211 is a negative electrode plate, and the second electrode plate 212 is a positive electrode plate. Along a direction opposite to the winding direction C of the electrode plate assembly 21 from inside to outside, a winding start section of the first active material layer 2112 extends beyond a winding start section of the second active material layer 2122, and/or along the winding direction C of the electrode plate assembly 21 from inside to outside, a winding tail section of the first active material layer 2112 extends beyond a winding tail section of the second active material layer 2122. Correspondingly, the first current collector 2111 further includes a third coated region 211g and/or a fourth coated region 211h, where a portion of the winding start section of the first active material layer 2112 extending beyond the winding start section of the second active material layer 2122 is a first ineffective region 2114, a portion of the winding tail section of the first active material layer 2112 extending beyond the winding tail section of the second active material layer 2122 is a second ineffective region 2115, the first ineffective region 2114 is disposed on a surface of the third coated region 211g, and the second ineffective region 2115 is disposed on a surface of the fourth coated region 211h. This helps to reduce the risk of lithium precipitation, thereby improving the safety performance of the electrochemical apparatus 100. Understandably, the first segment 211f includes the fourth coated region 211h.

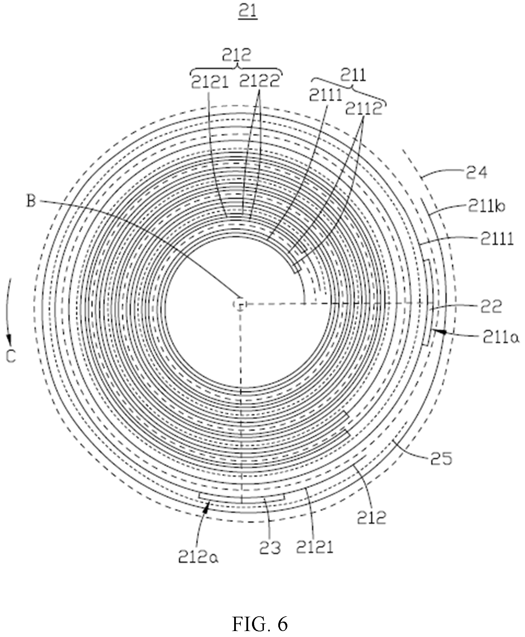

In some embodiments, referring to FIG. 6, along the winding direction of the electrode plate assembly 21 from inside to outside, the winding tail section of the first current collector 2111 further includes a blank segment 211b extending beyond the first region 211a and having no first active material layer 2112 disposed on a surface of the blank segment 211b, where the blank segment 211b covers the winding tail section of the second current collector 2121. In such arrangement, the blank segment 211b of the first current collector 2111 is disposed between the winding tail section of the second current collector 2121 and the first housing portion 11, which helps to enhance an isolation effect between the second current collector 2121 and the first housing portion 11, thereby helping to reduce the risk of short circuit caused by direct contact between the second current collector 2121 and the first housing portion 11.

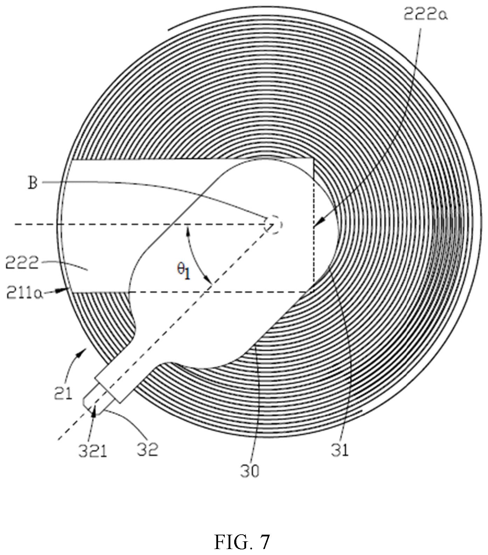

In some embodiments, referring to FIG. 4 and FIG. 7, the first tab 22 includes a first connection portion 221 and a first bent portion 222, where the first connection portion 221 is connected to the first region 211a, and the first bent portion 222 includes a third region 222a connected to the first housing portion 11. The electrochemical apparatus 100 further includes a first connector 30, the first connector 30 is located outside the housing 10, and the first connector 30 includes a first end portion 31 and a second end portion 32. The first end portion 31 is connected to the first housing portion 11, the second end portion 32 includes a fourth region 321 configured to be connected to an external load, and an angle between a ray from the center of the third region 222a to the center of the first region 211a and a ray from the center of the third region 222a to the center of the fourth region 321 is $\theta_1$, satisfying $\theta_1 \leq 45°$. This helps to reduce the impact of the current passing through the first bent portion 222 on the axial magnetic field, thereby further reducing the interference to the electrical device 1000.

Understandably, the first region 211a typically has a specific planar shape. When the planar shape of the first region 211a is a continuous entirety, the center of the first region 211a is defined as the centroid of the planar shape of the first region 211a, and the centroid of the planar shape can be determined by a hanging method. When the first region 211a is composed by multiple discrete regions (for example, the first current collector 2111 and the first connection portion 221 are connected through multiple discrete dotted regions), the center of the first region 211a is defined as the circle center of the smallest circumscribed circle containing the multiple discrete regions. Determination methods for the center of the third region 222a and the center of the fourth region 321 are the same as that for the center of the first region 211a, and details are not described herein again.

In some embodiments, referring to FIG. 4, the first bent portion 222 is bent toward the first end face 21a of the electrode plate assembly 21, and along the width direction of the first electrode plate 211, the first bent portion 222 is located on one side of the electrode plate assembly 21, and the first bent portion 222 is connected to the first housing portion 11.

In some embodiments, referring to FIG. 4, the first bent portion 222 extends in a direction parallel to the first end face 21a.

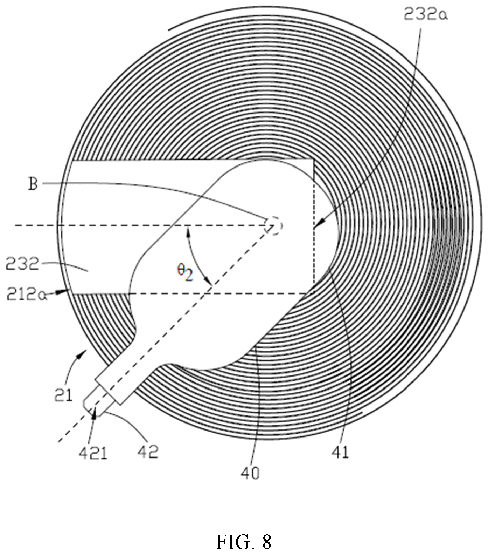

In some embodiments, referring to FIG. 4 and FIG. 8, the second tab 23 includes a second connection portion 231 and a second bent portion 232, where the second connection portion 231 is connected to the second region 212a, and the second bent portion 232 includes a fifth region 232a connected to the second housing portion 12. The electrochemical apparatus 100 further includes a second connector 40, the second connector 40 is located outside the housing 10, and the second connector 40 includes a third end portion 41 and a fourth end portion 42. The third end portion 41 is connected to the second housing portion 12, the fourth end portion 42 includes a sixth region 421 configured to be connected to an external load, and an angle between a ray from the center of the fifth region 232a to the center of the second region 212a and a ray from the center of the fifth region 232a to the center of the sixth region 421 is $\theta_2$, satisfying $\theta_2 \leq 45°$. This helps to reduce the impact of the current passing through the second bent portion 232 on the axial magnetic field, thereby further reducing the interference to the electrical device 1000. Determination methods for the center of the second region 212a, the center of the fifth region 232a, and the center of the sixth region 421 are the same as that for the center of the first region 211a, and details are not described herein again.

In some embodiments, referring to FIG. 4, the second bent portion 232 is bent toward the second end face 21b of the electrode plate assembly 21, and along the width direction of the first electrode plate 211, the second bent portion 232 is located on a side of the electrode plate assembly 21 facing away from the first bent portion 222, and the second bent portion 232 is connected to the second housing portion 12.

In some embodiments, referring to FIG. 4, the second bent portion 232 extends in a direction parallel to the second end face 21b.

In some embodiments, referring to FIG. 5 and FIG. 6, the electrode plate assembly 21 further includes a first separator 24, where the first separator 24 is disposed between the first electrode plate 211 and the second electrode plate 212. Along the winding direction of the electrode plate assembly 21 from inside to outside, a winding tail section of the first separator 24 extends beyond the first electrode plate 211, allowing the winding tail end of the first electrode plate 211 to be covered by the first separator 24, thereby helping to reduce the risk of direct contact between the first electrode plate 211 and the second electrode plate 212.

In some embodiments, referring to FIG. 5 and FIG. 6, the electrode plate assembly 21 further includes a second separator 25, where the second separator 25 is disposed between the first electrode plate 211 and the second electrode plate 212. Along the winding direction of the electrode plate assembly 21 from inside to outside, a winding tail section of the second separator 25 extends beyond the second electrode plate 212, allowing the winding tail section of the second electrode plate 212 to be covered by the second separator 25, thereby helping to reduce the risk of direct contact between the second electrode plate 212 and the first electrode plate 211 or the housing 10.

In some embodiments, along the winding direction of the electrode plate assembly 21 from inside to outside, the winding tail section of the first separator 24 and/or the second separator 25 is fixedly adhered to a main body of the electrode plate assembly 21 by an adhesive tape, which helps to reduce the risk of curling of the winding tail section of the first separator 24 and/or the second separator 25.

In some embodiments, referring to FIG. 5 and FIG. 6, the second electrode plate 212 is located between the first separator 24 and the second separator 25. In some other embodiments, the first electrode plate 211 is located between the first separator 24 and the second separator 25.

In some embodiments, the first separator 24 and the second separator 25 may be made of materials such as polyethylene (PE) or polypropylene (PP) and are configured to isolate the first electrode plate 211 from the second electrode plate 212.

In some embodiments, the electrochemical apparatus 100 further includes an insulating member (not shown in the figures), where the insulating member is disposed between the housing 10 and the electrode plate assembly 21. This helps to reduce the risk of direct contact between the electrode plate assembly 21 and the housing 10, thereby helping to reduce the risk of internal short circuit in the electrochemical apparatus 100.

To verify a demagnetization effect on the axial magnetic field generated when the length by which the first region 211a extends beyond the second region 212a in the electrochemical apparatus 100 of this application is controlled and satisfies the condition: $|F_1-F_2| \leq 4 \times 10^{-5}$, the following experiments were conducted. First, magnetic field strengths of different turns of a first electrode plate 211 and magnetic field strengths of different turns of a second electrode plate 212 in an electrochemical apparatus 100 were measured, followed by multiple comparative experiments for verification.

Taking a cylindrical battery with a wound structure as an example, the cylindrical battery was assembled in a Bluetooth earphone, the first electrode plate 211 was a negative electrode plate, the second electrode plate 212 was a positive electrode plate, the first electrode plate 211 and the second electrode plate 212 were both wound for 21.25 turns, the first coated region 211c and the second coated region 212b were both wound for 21 turns, the first segment 211f and the second segment 212e were both wound for 0.25 turn (since both had no active material layer on their surfaces and were very close to each other, the magnetic fields generated can be approximately counteracted), a spacing between the first coated region 211c and the second coated region 212b of the current collectors was 86 $\mu$m, and with the equivalent current strength in the first segment 211f and the second segment 212e being 1A, the magnetic field strength of the second coated region 212b in the second electrode plate 212 was calculated, as shown in Table 2 below.

**Table 2: Magnetic field strength of different turns of second electrode plate 212**

| Winding radius of i-th turn of second current collector 2121 ($R_{2i}$) (mm) | Length proportion of second effective region 2123 in i-th turn ($X_{2i}$) | Equivalent current strength of i-th turn of second current collector 2121 ($\lambda_{2i}$) (A) | Equivalent magnetic field strength of i-th turn of second current collector 2121 at equivalent current strength of 1A ($10^{-4}$T) | Actual equivalent magnetic field strength of i-th turn of second current collector 2121 ($10^{-4}$T) | Cumulative magnetic field strength of second electrode plate 212 ($F_2$) (T) |
|---|---|---|---|---|---|
| 5 | 3.797% | 0.9810 | 1.7115 | 1.6790 | |
| 4.8254 | 7.330% | 0.9254 | 3.3042 | 3.0576 | |
| 4.6508 | 7.064% | 0.8534 | 4.7810 | 4.0801 | |
| 4.4762 | 6.799% | 0.7841 | 6.1227 | 4.8007 | |
| 4.3016 | 6.534% | 0.7174 | 7.3136 | 5.2470 | |
| 4.127 | 6.269% | 0.6534 | 8.3420 | 5.4507 | |
| 3.9524 | 6.004% | 0.5920 | 9.1998 | 5.4467 | |
| 3.7778 | 5.738% | 0.5333 | 9.8827 | 5.2708 | |
| 3.6032 | 5.473% | 0.4773 | 10.3901 | 4.9590 | 0.006409 |
| 3.4286 | 5.208% | 0.4239 | 10.7254 | 4.5462 | |
| 3.254 | 4.943% | 0.3731 | 10.8954 | 4.0653 | |
| 3.0794 | 4.678% | 0.3250 | 10.9111 | 3.5463 | |
| 2.9048 | 4.412% | 0.2796 | 10.7867 | 3.0156 | |
| 2.7302 | 4.147% | 0.2368 | 10.5408 | 2.4958 | |
| 2.5556 | 3.882% | 0.1966 | 10.1953 | 2.0047 | |
| 2.381 | 3.617% | 0.1591 | 9.7759 | 1.5557 | |
| 2.2064 | 3.351% | 0.1243 | 9.3124 | 1.1575 | |
| 2.0318 | 3.086% | 0.0921 | 8.8379 | 0.8140 | |
| 1.8572 | 2.821% | 0.0626 | 8.3896 | 0.5249 | |
| 1.6826 | 2.556% | 0.0357 | 8.0084 | 0.2858 | |
| 1.508 | 2.291% | 0.0115 | 7.7388 | 0.0886 | |

The magnetic field strength of the first electrode plate 211 was calculated, as shown in Table 3.

**Table 3: Magnetic field strength of different turns of first electrode plate 211**

| Winding radius of i-th turn of first current collector 2111 ($R_{1i}$) (mm) | Length proportion of first effective region 2113 in i-th turn ($X_{1i}$) | Equivalent current strength of i-th turn of first current collector 2111 ($\lambda_{1i}$) (A) | Equivalent magnetic field strength of i-th turn of first current collector 2111 at equivalent current strength of 1A ($10^{-4}$T) | Actual equivalent magnetic field strength of i-th turn of first current collector 2111 ($10^{-4}$T) | Cumulative magnetic field strength of first electrode plate 211 ($F_1$) (T) |
|---|---|---|---|---|---|
| 4.913 | 7.467% | 0.9627 | 2.518218687 | 2.424201465 | |
| 4.7384 | 7.202% | 0.8893 | 4.055825344 | 3.60693625 | |
| 4.5638 | 6.936% | 0.8186 | 5.467499275 | 4.475876482 | |
| 4.3892 | 6.671% | 0.7506 | 6.735777158 | 5.055858682 | |
| 4.2146 | 6.406% | 0.6852 | 7.846957511 | 5.376859103 | |

(continued)

| Winding radius of i-th turn of first current collector 2111 ($R_{1i}$) (mm) | Length proportion of first effective region 2113 in i-th turn ($X_{1i}$) | Equivalent current strength of i-th turn of first current collector 2111 ($\lambda_{1i}$) (A) | Equivalent magnetic field strength of i-th turn of first current collector 2111 at equivalent current strength of 1A ($10^{-4}$T) | Actual equivalent magnetic field strength of i-th turn of first current collector 2111 ($10^{-4}$T) | Cumulative magnetic field strength of first electrode plate 211 ($F_1$) (T) |
|---|---|---|---|---|---|
| 4.04 | 6.140% | 0.6225 | 8.791100692 | 5.472350453 | |
| 3.8654 | 5.875% | 0.5624 | 9.562028898 | 5.377808348 | |
| 3.6908 | 5.609% | 0.5050 | 10.15732617 | 5.12936751 | |
| 3.5162 | 5.344% | 0.4502 | 10.57833838 | 4.7626277 | |
| 3.3416 | 5.079% | 0.3981 | 10.83017325 | 4.311609388 | |
| 3.167 | 4.813% | 0.3487 | 10.92170033 | 3.807859165 | 0.006345 |
| 2.9924 | 4.548% | 0.3018 | 10.86555102 | 3.279704893 | |
| 2.8178 | 4.283% | 0.2577 | 10.67811857 | 2.751660588 | |
| 2.6432 | 4.017% | 0.2162 | 10.37955803 | 2.243981049 | |
| 2.4686 | 3.752% | 0.1773 | 9.993786335 | 1.77236622 | |
| 2.294 | 3.487% | 0.1412 | 9.548482235 | 1.34781529 | |
| 2.1194 | 3.221% | 0.1076 | 9.075086326 | 0.976630539 | |
| 1.9448 | 2.956% | 0.0767 | 8.608801043 | 0.660570909 | |
| 1.7702 | 2.690% | 0.0485 | 8.188590662 | 0.397155328 | |
| 1.5956 | 2.425% | 0.0229 | 7.857181297 | 0.180115759 | |
| 1.421 | 1.080% | 0.0054 | 7.661060903 | 0.041363779 | |

Based on the comparison between the magnetic field strengths of the first electrode plate 211 and the magnetic field strengths of the second electrode plate 212 in the above Table 2 and Table 3, it can be learned that the length of the first electrode plate 211 needs to be extended to reduce the axial magnetic field. According to the formula, the optimal extended length of the first electrode plate 211 satisfies: $D_1 = 2\pi \times R_1 \times (F_2 - F_1)/f(R_1)$ $= 2 \times 3.14 \times 5 \times (0.006409 - 0.006345)/0.0001711 = 11.745$ mm, where $R_1$ is a distance from the center of the first region 211a to the winding center B, approximately equal to a winding radius of the outermost turn of the second coated region 212b, which is 5 mm. An angle by which the ray from the winding center B of the electrode plate assembly 21 to the center of the first region 211a rotates from a position before the extension of the first electrode plate 211 to a position after the extension of the first electrode plate 211 satisfies: $\theta_1' = 360° \times D_1/2\pi R_1 = 134.5°$.

To verify the demagnetization effect of the extension of the first electrode plate 211 on the axial magnetic field in the above embodiment, batteries having first electrode plates 211 with different extended lengths $D_1$ were manufactured and provided with a current of 40 mA for the following comparative experiments, with the experiment results shown in Table 4 below.

**Table 4: Magnetic field strength of batteries with different extended lengths $D_1$**

| F1-F2 ($10^{-5}$ T) | $D_1$ (mm) | $\theta_1'$ (°) | Axial magnetic field strength of electrode plate assembly 21 (T) |
|---|---|---|---|
| -4.254 | 3.925 | 45 | $-1.65 \times 10^{-6}$ |
| -3.541 | 5.233 | 60 | $-1.42 \times 10^{-6}$ |
| -2.828 | 6.542 | 75 | $-1.10 \times 10^{-6}$ |
| -2.115 | 7.850 | 90 | $-0.82 \times 10^{-6}$ |
| -1.402 | 9.158 | 105 | $-0.52 \times 10^{-6}$ |
| -0.689 | 10.467 | 120 | $-0.28 \times 10^{-6}$ |

(continued)

| $F_1-F_2$ ($10^{-5}$ T) | $D_1$ (mm) | $\theta_1'$ (°) | Axial magnetic field strength of electrode plate assembly 21 (T) |
|---|---|---|---|
| 0.024 | 11.775 | 135 | $-0.5\times10^{-7}$ |
| 0.737 | 13.083 | 150 | $3.2\times10^{-7}$ |
| 1.451 | 14.392 | 165 | $6.5\times10^{-7}$ |
| 2.164 | 15.700 | 180 | $9.1\times10^{-7}$ |
| 2.877 | 17.008 | 195 | $1.2\times10^{-6}$ |
| 3.590 | 18.317 | 210 | $1.45\times10^{-6}$ |
| 4.30 | 19.62 | 225 | $1.71\times10^{-6}$ |

Referring to the above Table 4, when the extended length $D_1$ of the first electrode plate 211 is 5.2 mm to 18.3 mm, and the angle $\theta_1'$ by which the ray from the winding center B of the electrode plate assembly 21 to the center of the first region 211a rotates from a position before the extension of the first electrode plate 211 to a position after the extension of the first electrode plate 211 is 60° to 210°, such that when $|F_1-F_2|\leq4\times10^{-5}$, the axial magnetic fields of the electrode assembly 20 are all extremely small.

Further, referring to Table 4, when $|F_1-F_2|\leq3\times10^{-5}$ is satisfied, the axial magnetic field at the end face of the wound structure can be further reduced, thereby further reducing the interference to the electrical device 1000.

Additionally, those skilled in the art should recognize that the above embodiments are only used to illustrate this application and are not used to limit this application. Any modifications, equivalent replacements, improvements, and the like made within the spirit and principles of this application should be included within the protection scope of this application.

**Claims**

1. An electrochemical apparatus, **characterized in that**, comprising:

 a housing; and
 an electrode assembly accommodated in the housing; wherein the electrode assembly comprises:

 an electrode plate assembly, comprising a first electrode plate and a second electrode plate arranged in a wound manner, wherein the first electrode plate comprises a first current collector and a first active material layer; the second electrode plate comprises a second current collector and a second active material layer; and a winding start section of the second active material layer is located on an outer winding side of the electrode plate assembly relative to a winding start section of the first active material layer;
 a first tab, wherein the first tab is connected to a first region of a winding tail section of the first current collector; and
 a second tab, wherein the second tab is connected to a second region of a winding tail section of the second current collector; wherein
 along a winding direction of the electrode plate assembly from inside to outside, the first region extends beyond the second region;
 the first active material layer comprises a first effective region, wherein the first effective region is a region of the first active material layer facing the second active material layer; along the winding direction of the electrode plate assembly from inside to outside, a total length of the first effective region is $L_1$ mm; the first current collector comprises a first coated region; and the first effective region is disposed on a surface of the first coated region;
 the second active material layer comprises a second effective region, wherein the second effective region is a region of the second active material layer facing the first active material layer; along the winding direction of the electrode plate assembly from inside to outside, a total length of the second effective region is $L_2$ mm; the second current collector comprises a second coated region; and the second effective region is disposed on a surface of the second coated region;
 along the winding direction of the electrode plate assembly from inside to outside, the first coated region comprises a first start end and a first termination end, the second coated region comprising a second start end and a second termination end;

the first current collector comprises a first segment from the first termination end to the center of the first region; a length of the first segment is $S_1$ mm, a winding angle of the first segment is $\alpha_1°$; the number of winding turns of the first segment $C_{10}$ is equal to $\alpha_1/360$; a winding radius of the first segment $R_{10}$ mm is equal to $S_1/(2\pi\times C_{10})$; the second current collector optionally comprises a second segment from the second termination end to the center of the second region; a length of the second segment is $S_2$ mm; a winding angle of the second segment is $\alpha_2°$; the number of winding turns of the second segment $C_{20}$ is equal to $\alpha_2/360$; and a winding radius of the second segment $R_{20}$ mm is equal to $S_2/(2\pi\times C_{20})$;

along the winding direction of the electrode plate assembly from inside to outside, the number of winding turns of the first coated region and the second coated region is n, a winding radius of the i-th turn of the first coated region is $R_{1i}$ mm, a winding radius of the i-th turn of the second coated region is $R_{2i}$ mm; a length of the first effective region in the i-th turn is $l_{1i}$ mm; a proportion of the first effective region in the i-th turn $X_{1i}$ is equal to $l_{1i}/L_1$; a length of the second effective region in the i-th turn is $l_{2i}$ mm; and a proportion of the second effective region in the i-th turn $X_{2i}$ is equal to $l_{2i}/L_2$;

an equivalent current strength of the i-th turn in the first coated region $\lambda_{1i}$ is equal to $X_{11}+...+X_{1(i-1)}+0.5X_{1i}$, and an equivalent current strength of the i-th turn in the second coated region $\lambda_{2i}$ is equal to $X_{21}+...+X_{2(i-1)}+0.5X_{2i}$;

an equivalent magnetic field strength of the i-th turn in the first coated region is $\lambda_{1i}\times f(R_{1i})$, an equivalent magnetic field strength of the first segment is $C_{10}\times f(R_{10})$, an equivalent magnetic field strength of the i-th turn in the second coated region is $\lambda_{2i}\times f(R_{2i})$, and an equivalent magnetic field strength of the second segment is $C_{20}\times f(R_{20})$,

wherein $f(R)=0.000016866\,R^4-0.0002591R^3+0.001204R^2-0.00198162R+0.0018255$;

a sum of equivalent magnetic field strengths of the first current collector is $F_1$, wherein

$$F_1=C_{10}\times f(R_{10})+\lambda_{11}\times f(R_{11})+\lambda_{12}\times f(R_{12})+\ldots+\lambda_{1n}\times f(R_{1n});$$

a sum of equivalent magnetic field strengths of the second current collector is $F_2$, wherein

$$F_2=C_{20}\times f(R_{20})+\lambda_{21}\times f(R_{21})+\lambda_{22}\times f(R_{22})+\ldots+\lambda_{2n}\times f(R_{2n});$$

and

$$|F_1-F_2|\leq 4\times 10^{-5}$$

is satisfied.

2. The electrochemical apparatus according to claim 1, **characterized in that**, $|F_1-F_2|\leq 3\times 10^{-5}$ is satisfied.

3. The electrochemical apparatus according to claim 1, **characterized in that**, along the winding direction of the electrode plate assembly from inside to outside, a winding length by which the first region extends beyond the second region is less than one turn.

4. The electrochemical apparatus according to claim 1, **characterized in that**, the first electrode plate is a negative electrode plate, the second electrode plate is a positive electrode plate, and at least one of the following conditions is satisfied:

   (1) along a direction opposite to the winding direction of the electrode plate assembly from inside to outside, the winding start section of the first active material layer extends beyond the winding start section of the second active material layer; or
   (2) along the winding direction of the electrode plate assembly from inside to outside, a winding tail section of the first active material layer extends beyond a winding tail section of the second active material layer.

5. The electrochemical apparatus according to claim 1, **characterized in that**, the housing comprises a first housing portion and a second housing portion with opposite polarities, the first housing portion comprises a top wall, a bottom wall, and a side wall, the second housing portion comprises an electrode pole, the top wall is provided with a through hole, and the electrode pole is disposed in the through hole.

6. The electrochemical apparatus according to claim 5, **characterized in that**, along the winding direction of the electrode plate assembly from inside to outside, the winding tail section of the first current collector further comprises a blank segment extending beyond the first region and having no first active material layer disposed on a surface of the blank segment, and the blank segment covers the winding tail section of the second current collector.

7. The electrochemical apparatus according to claim 5, **characterized in that**, at least one of the following conditions is satisfied:

> (1) the first tab comprises a first connection portion and a first bent portion; the first connection portion is connected to the first region; the first bent portion comprises a third region connected to the first housing portion; the electrochemical apparatus further comprises a first connector; the first connector is located outside the housing; the first connector comprises a first end portion and a second end portion; the first end portion is connected to the first housing portion; the second end portion comprises a fourth region configured to be connected to an external load; and an angle between a ray from the center of the third region to the center of the first region and a ray from the center of the third region to the center of the fourth region is $\theta_1$, satisfying $\theta_1 \leq 45°$; or
> (2) the second tab comprises a second connection portion and a second bent portion; the second connection portion is connected to the second region; the second bent portion comprises a fifth region connected to the second housing portion; the electrochemical apparatus further comprises a second connector; the second connector is located outside the housing; the second connector comprises a third end portion and a fourth end portion; the third end portion is connected to the second housing portion; the fourth end portion comprises a sixth region configured to be connected to an external load; and an angle between a ray from the center of the fifth region to the center of the second region and a ray from the center of the fifth region to the center of the sixth region is $\theta_2$, satisfying $\theta_2 \leq 45°$.

8. The electrochemical apparatus according to claim 1, **characterized in that**, at least one of the following conditions is satisfied:

> (1) the electrode plate assembly further comprises a first separator, the first separator is disposed between the first electrode plate and the second electrode plate, and along the winding direction of the electrode plate assembly from inside to outside, a winding tail section of the first separator extends beyond the first electrode plate; or
> (2) the electrode plate assembly further comprises a second separator, the second separator is disposed between the first electrode plate and the second electrode plate, and along the winding direction of the electrode plate assembly from inside to outside, a winding tail section of the second separator extends beyond the second electrode plate.

9. The electrochemical apparatus according to any one of claims 1 to 8, **characterized in that**, the electrochemical apparatus further comprises an insulating member, and the insulating member is disposed between the housing and the electrode plate assembly.

10. An electrical device, **characterized in that**, comprising the electrochemical apparatus according to any one of claims 1 to 9.

11. A preparation method of an electrochemical apparatus, wherein the electrochemical apparatus comprises:

> a housing;
> an electrode assembly accommodated in the housing, wherein the electrode assembly comprises:

>> an electrode plate assembly, comprising a first electrode plate and a second electrode plate arranged in a wound manner, wherein the first electrode plate comprises a first current collector and a first active material layer; the second electrode plate comprises a second current collector and a second active material layer; and a winding start section of the second active material layer is located on an outer winding side of the electrode plate assembly relative to a winding start section of the first active material layer;
>> a first tab, wherein the first tab is connected to a first region of a winding tail section of the first current collector; and
>> a second tab, wherein the second tab is connected to a second region of a winding tail section of the second current collector; wherein
>> along a winding direction of the electrode plate assembly from inside to outside, the first region extends beyond the second region;
>> the first active material layer comprises a first effective region, wherein the first effective region is a region of the first active material layer facing the second active material layer; along the winding direction of the electrode plate assembly from inside to outside, a total length of the first effective region is $L_1$ mm; the first current collector comprises a first coated region; and the first effective region is disposed on a surface of the first coated region;

the second active material layer comprises a second effective region, wherein the second effective region is a region of the second active material layer facing the first active material layer; along the winding direction of the electrode plate assembly from inside to outside, a total length of the second effective region is $L_2$ mm; the second current collector comprises a second coated region; and the second effective region is disposed on a surface of the second coated region;

along the winding direction of the electrode plate assembly from inside to outside, the first coated region comprises a first start end and a first termination end, and the second coated region comprises a second start end and a second termination end;

the first current collector comprises a first segment from the first termination end to the center of the first region, wherein a length of the first segment is $S_1$ mm; and the second current collector optionally comprises a second segment from the second termination end to the center of the second region, wherein a length of the second segment is $S_2$ mm;

along the winding direction of the electrode plate assembly from inside to outside, the number of winding turns of the first coated region and the second coated region is n; a winding radius of the i-th turn of the first coated region is $R_{1i}$ mm; a winding radius of the i-th turn of the second coated region is $R_{2i}$ mm; a length of the first effective region in the i-th turn is $l_{1i}$ mm; a proportion of the first effective region in the i-th turn $X_{1i}$ is equal to $l_{1i}/L_1$; a length of the second effective region in the i-th turn is $l_{2i}$ mm; and a proportion of the second effective region in the i-th turn $X_{2i}$ is equal to $l_{2i}/L_2$; and

an equivalent current strength of the i-th turn in the first coated region $\lambda_{1i}$ is equal to $X_{11}+...+X_{1(i-1)}+0.5X_{1i}$, and an equivalent current strength of the i-th turn in the second coated region $\lambda_{2i}$ is equal to $X_{21}+...+X_{2(i-1)}+0.5X_{2i}$; **characterized in that**, based on an equivalent magnetic field strength generated in the i-th turn of the first coated region by the equivalent current strength $\lambda_{1i}$ in the i-th turn of the first coated region, a sum of equivalent magnetic field strengths generated by the first coated region is calculated; based on an equivalent magnetic field strength generated in the i-th turn of the second coated region by the equivalent current strength $\lambda_{2i}$ in the i-th turn of the second coated region, a sum of equivalent magnetic field strengths generated by the second coated region is calculated; and based on a difference between the sum of the equivalent magnetic field strengths generated by the first coated region and the sum of the equivalent magnetic field strengths generated by the second coated region, a value by which the length $S_1$ mm of the first segment is greater than the length $S_2$ mm of the second segment is determined to achieve a small difference between a sum of equivalent magnetic field strengths $F_1$ generated by the first current collector and a sum of equivalent magnetic field strengths $F_2$ generated by the second current collector.

12. The preparation method according to claim 11, **characterized in that**, based on $f(R)=0.000016866 R^4-0.0002591R^3+0.001204R^2-0.00198162R+0.0018255$, the equivalent magnetic field strength generated by the i-th turn in the first coated region is calculated as $\lambda_{1i}\times f(R_{1i})$, and the equivalent magnetic field strength generated by the i-th turn in the second coated region is calculated as $\lambda_{2i}\times f(R_{2i})$.

13. The preparation method according to claim 12, **characterized in that**, further comprising a step of calculating an equivalent magnetic field strength of the first segment and an equivalent magnetic field strength of the second segment, wherein a winding angle of the first segment is $\alpha_1$°, the number of winding turns of the first segment $C_{10}$ is equal to $\alpha_1/360$, a winding radius of the first segment $R_{10}$ mm is equal to $S_1/(2\pi\times C_{10})$, a winding angle of the second segment is $\alpha_2$°, the number of winding turns of the second segment $C_{20}$ is equal to $\alpha_2/360$, a winding radius of the second segment $R_{20}$ mm is equal to $S_2/(2\pi\times C_{20})$, the equivalent magnetic field strength of the first segment is $C_{10}\times f(R_{10})$, and the equivalent magnetic field strength of the second segment is $C_{20}\times f(R_{20})$, satisfying $F_1=C_{10}\times f(R_{10})+\lambda_{11}\times f(R_{11})+\lambda_{12}\times f(R_{12})+...+\lambda_{1n}\times f(R_{1n})$, and $F_2=C_{20}\times f(R_{20})+\lambda_{21}\times f(R_{21})+\lambda_{22}\times f(R_{22})+...+\lambda_{2n}\times f(R_{2n})$; and determining a value by which the length $S_1$ mm of the first segment is greater than the length $S_2$ mm of the second segment, to make $F_1$ and $F_2$ satisfy: $|F_1-F_2|\leq 4\times 10^{-5}$.

1000

FIG. 1

100

FIG. 2

FIG. 3

20

FIG. 4

FIG. 5

FIG. 6

FIG. 7

FIG. 8

## INTERNATIONAL SEARCH REPORT

| International application No. |
|---|
| **PCT/CN2023/111338** |

| A. | CLASSIFICATION OF SUBJECT MATTER |
|---|---|

H01M10/0587(2010.01)i

According to International Patent Classification (IPC) or to both national classification and IPC

| B. | FIELDS SEARCHED |
|---|---|

Minimum documentation searched (classification system followed by classification symbols)

IPC:H01M10/-

Documentation searched other than minimum documentation to the extent that such documents are included in the fields searched

Electronic data base consulted during the international search (name of data base and, where practicable, search terms used)

CJFD, CNTXT, VCN, DWPI: 电池, 电化学装置, 降低, 抵消, 磁场, 轴向, 等效磁场强度, 卷绕, 角度, 圈数, 集流体, 活性物质, 空白段, 涂覆区, battery, cell, electrochemical device, reducing, countering, magnetic field, axial, equivalent magnetic field strength, winding, angle, number of turns, current collector, active material, blank segment, coated area

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 114583236 A (NINGDE AMPEREX TECHNOLOGY LTD.) 03 June 2022 (2022-06-03) description, paragraphs [0003]-[0014], and figures 1-3 and 8-11 | 1-13 |
| A | CN 214706178 U (BYD CO., LTD.) 12 November 2021 (2021-11-12) entire document | 1-13 |
| A | CN 215644894 U (GOERTEK TECHNOLOGY CO., LTD.) 25 January 2022 (2022-01-25) entire document | 1-13 |
| A | CN 216288852 U (NINGDE AMPEREX TECHNOLOGY LTD.) 12 April 2022 (2022-04-12) entire document | 1-13 |
| A | US 2012177963 A1 (LG CHEM., LTD.) 12 July 2012 (2012-07-12) entire document | 1-13 |
| A | WO 2023070591 A1 (NINGDE AMPEREX TECHNOLOGY LTD.) 04 May 2023 (2023-05-04) entire document | 1-13 |

☐ Further documents are listed in the continuation of Box C.      ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **15 November 2023** | **21 November 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/111338**

| Patent document cited in search report | | | Publication date (day/month/year) | Patent family member(s) | | | Publication date (day/month/year) |
|---|---|---|---|---|---|---|---|
| CN | 114583236 | A | 03 June 2022 | None | | | |
| CN | 214706178 | U | 12 November 2021 | None | | | |
| CN | 215644894 | U | 25 January 2022 | None | | | |
| CN | 216288852 | U | 12 April 2022 | None | | | |
| US | 2012177963 | A1 | 12 July 2012 | EP | 2610954 | A2 | 03 July 2013 |
| | | | | EP | 2610954 | A4 | 17 September 2014 |
| | | | | EP | 2610954 | B1 | 15 August 2018 |
| | | | | EP | 2610954 | B8 | 23 January 2019 |
| | | | | JP | 2014060173 | A | 03 April 2014 |
| | | | | JP | 5852089 | B2 | 03 February 2016 |
| | | | | TW | 201220579 | A | 16 May 2012 |
| | | | | TWI | 455389 | B | 01 October 2014 |
| | | | | KR | 20130076838 | A | 08 July 2013 |
| | | | | KR | 101359301 | B1 | 11 February 2014 |
| | | | | JP | 2012530354 | A | 29 November 2012 |
| | | | | JP | 5676620 | B2 | 25 February 2015 |
| | | | | WO | 2012026705 | A2 | 01 March 2012 |
| | | | | WO | 2012026705 | A3 | 18 May 2012 |
| | | | | WO | 2012026705 | A9 | 05 July 2012 |
| | | | | KR | 20120018723 | A | 05 March 2012 |
| | | | | KR | 101285745 | B1 | 23 July 2013 |
| | | | | TW | 201414049 | A | 01 April 2014 |
| | | | | TWI | 481094 | B | 11 April 2015 |
| WO | 2023070591 | A1 | 04 May 2023 | None | | | |